# EUROPÄISCHE PATENTANMELDUNG

(11) **EP 2 874 382 A1**
(43) Veröffentlichungstag der Anmeldung: **20.05.2015**
(21) Anmeldenummer: 13192708.9
(22) Anmeldetag: 13.11.2013
(51) Int. Cl.: H04M 1/725

(54) **Schalter zum Aktivieren eines Datenschutzmodus eines elektronischen Geräts**

(71) Anmelder: Siemens Aktiengesellschaft, 80333 München (DE)
(72) Erfinder: Krüger, Thorsten, 83627 Warngau (DE)

(57) **Zusammenfassung**

Es wird ein Schalter (10) zum Aktivieren eines Datenschutzmodus eines elektronischen Geräts (20) vorgeschlagen, welches zum Versenden von auf dem elektronischen Gerät (20) gespeicherten Daten eingerichtet ist. Der Schalter (10) weist eine Schnittstelle (12) zum Koppeln des Schalters (10) mit dem elektronischen Gerät (20) auf und ist dazu eingerichtet, bei einer mechanischen Betätigung durch einen Benutzer ein Signal (13) an das elektronische Gerät (20) zu senden, um den Datenschutzmodus zu aktivieren.

Mit dem vorgeschlagenen Schalter kann auf einfache Weise eine Aktivierung eines Datenschutzmodus realisiert werden, um das Versenden von persönlichen Daten zu deaktivieren.

Des Weiteren werden ein elektronisches Gerät mit einem solchen Schalter sowie ein entsprechendes Verfahren vorgeschlagen.

## Beschreibung

Die vorliegende Erfindung betrifft einen Schalter zum Aktivieren eines Datenschutzmodus eines elektronischen Geräts, ein elektronisches Gerät mit einem solchen Schalter sowie ein entsprechendes Verfahren.

Auf vielen elektronischen Geräten, wie beispielsweise mobilen Endgeräten, zu denen auch Smartphones oder Tablet-PCs gehören, werden Daten gespeichert, die als persönliche Daten aufgefasst werden können. Zu solchen persönlichen oder privaten Daten gehören beispielsweise orts- und zeitbezogene Daten, die Rückschlüsse auf den Aufenthaltsort eines Benutzers des elektronischen Geräts zulassen. Des Weiteren gehören zu solchen persönlichen Daten auch Sensordaten, die von dem elektronischen Gerät gesammelt oder erzeugt und an verschiedene Dienstleister, wie auch den Netzbetreiber, gesendet werden. Es ist nicht immer gewünscht, dass solche Daten sichtbar sind, das heißt durch Dritte gesehen werden können, oder an Dritte, wie beispielsweise Dienstleister oder den Netzbetreiber, gesendet werden.

Auf bestehenden elektronischen Geräten können Einstellungen vorgenommen werden, um das Versenden von solchen persönlichen Daten zu limitieren. Allerdings ist zum einen nicht immer transparent, welche Daten durch das elektronische Gerät versendet werden. Zum anderen sind solche Einstellungen durch den Benutzer häufig umständlich über die Gerätesoftware vorzunehmen, wobei sich diese Einstellungen für den Benutzer nicht ohne weiteres ergeben.

Vor diesem Hintergrund besteht eine Aufgabe der vorliegenden Erfindung darin, eine einfache Möglichkeit bereitzustellen, das Versenden von persönlichen Daten zu steuern.

Demgemäß wird ein Schalter zum Aktivieren eines Datenschutzmodus eines elektronischen Geräts vorgeschlagen. Das elektronische Gerät ist zum Versenden von auf dem elektronischen Gerät gespeicherten Daten eingerichtet. Der Schalter weist eine Schnittstelle zum Koppeln des Schalters mit dem elektronischen Gerät auf. Der Schalter ist dazu eingerichtet, bei einer mechanischen Betätigung durch einen Benutzer ein Signal an das elektronische Gerät zu senden, um den Datenschutzmodus zu aktivieren.

Bei der Kopplung, die durch die Schnittstelle realisiert wird, handelt es sich insbesondere um eine elektronische Kopplung. Durch diese elektronische Kopplung kann ein Signal zwischen dem Schalter und dem elektronischen Gerät übertragen werden. Durch das Signal, das an das elektronische Gerät gesendet wird, wird ein Datenschutzmodus aktiviert. Durch die Aktivierung des Datenschutzmodus werden Einstellungen des elektronischen Geräts zum Versenden von gespeicherten Daten geändert.

Durch den Schalter, der ein mechanischer Schalter bzw. Hardware-Switch ist, ist auf einfache Weise eine Aktivierung eines Datenschutzmodus möglich. Datenschutzmodus in diesem Zusammenhang bezieht sich auf einen Modus, in dem ein Weiterleiten von Daten beispielsweise an den Netzbetreiber oder einen anderen Drittanbieter eingeschränkt wird. Da dies über einen mechanischen Schalter erfolgt, ist das Aktivieren des Datenschutzmodus auf einfache Weise auch für einen unerfahrenen Benutzer möglich. Es ist nicht erforderlich, dass der Benutzer sich in ein Einstellungsmenü des elektronischen Geräts einarbeitet, um dort Einstellungen vorzunehmen, sondern kann durch eine einfache Betätigung eines Schalters den Datenschutzmodus aktivieren, ähnlich zu einem Aus/Ein-Schalten des Tons bei einem Smartphone.

Gemäß einer Ausführungsform ist die Schnittstelle eine Funkschnittstelle.

Die Funkschnittstelle kann beispielsweise eine Bluetooth-Schnittstelle sein. Der Schalter muss daher nicht physikalisch mit dem elektronischen Gerät verbunden sein, sondern kann lediglich über die Funkschnittstelle kommunizieren. Auf diese Weise kann der Schalter auch entfernt von dem elektronischen Gerät angeordnet sein. Beispielsweise kann der Schalter an einer Tastatur angebracht sein und einen Datenschutzmodus eines Desktop-Computers, mit dem die Tastatur verbunden ist, aktivieren.

Gemäß einer weiteren Ausführungsform ist die Schnittstelle eine kabelgebundene Schnittstelle.

Der Schalter kann beispielsweise über einen beliebigen Anschluss des elektronischen Geräts, wie einen Kopfhörer- oder Ladekabelanschluss, physikalisch mit dem elektronischen Gerät gekoppelt werden. Die Schnittstelle stellt also eine Plug-in-Schnittstelle dar. Der Anschluss kann auch über einen USB-Anschluss erfolgen. Alternativ kann der Schalter direkt in das elektronische Gerät eingebaut bzw. implementiert sein.

Gemäß einer weiteren Ausführungsform weisen die gespeicherten Daten persönliche Daten des Benutzers auf.

Die persönlichen Daten bzw. privaten Daten können beispielsweise Sensordaten sein, die von dem elektronischen Gerät gesammelt oder erzeugt und an Dritte versendet werden. Des Weiteren können die persönlichen auch orts- und zeitbezogene Daten sein. Hierzu zählen beispielsweise auch Mikrofon-/Kamera- bzw. Sprach- und Bilddaten. Des Weiteren können die gespeicherten Daten auch Beschleunigungsdaten aufweisen.

In einer Ausführungsform kann der Benutzer gespeicherte Daten als persönliche Daten kennzeichnen. Auf diese Weise kann genau definiert werden, welche Daten in dem Datenschutzmodus durch das elektronische Gerät weitergegeben werden dürfen und welche nicht.

Gemäß einer weiteren Ausführungsform ist der Schalter dazu eingerichtet, in Antwort auf eine erneute Betätigung des Benutzers den Datenschutzmodus zu deaktivieren.

Der Schalter dient daher dazu, den Datenschutzmodus zu aktivieren und zu deaktivieren. Dies kann über eine einfache Betätigung des Schalters erfolgen. Der Schalter kann beispielsweise in Form eines Schiebeschalters oder eines Tasters realisiert sein.

Gemäß einer weiteren Ausführungsform ist das elektronische Gerät dazu eingerichtet, in dem aktivierten Datenschutzmodus keine gespeicherten Daten zu versenden.

Gemäß dieser Ausführungsform werden in dem aktivierten Datenschutzmodus keinerlei gespeicherte Daten versendet. Durch diesen Datenschutzmodus oder Privacy-Modus wird die normale Kommunikation des elektronischen Geräts mit anderen Geräten nicht eingeschränkt. Allerdings wird das Versenden von gespeicherten Daten blockiert.

Gemäß einer weiteren Ausführungsform weist der Schalter eine erste Schalterstellung und eine zweite Schalterstellung auf, wobei die erste Schalterstellung einem deaktivierten Datenschutzmodus entspricht und die zweite Schalterstellung einem aktivierten Datenschutzmodus entspricht.

Gemäß dieser Ausführungsform ist durch die Stellung des Schalters auf einfache Weise ersichtlich, in welchem Modus sich das Gerät befindet. Beispielsweise kann die erste Schalterstellung farblich gekennzeichnet sein und die zweite Schalterstellung ohne Farbe oder mit einer anderen Farbmarkierung gekennzeichnet sein. Eine weitere Möglichkeit, die Schalterstellungen zu kennzeichnen, besteht darin, Anzeigeelemente vorzusehen. Beispielsweise können LEDs vorgesehen sein, die in verschiedenen Farben leuchten oder an- bzw. ausgeschaltet werden, je nach Einstellung des Schalters.

Gemäß einer weiteren Ausführungsform weist der Schalter eine dritte Schalterstellung auf, die einem eingeschränkten Datenschutzmodus entspricht.

In dem eingeschränkten Datenschutzmodus können manche der gespeicherten Daten versendet und manche der gespeicherten Daten nicht versendet werden. Die dritte Schalterstellung kann auch als Intermediate-Schalterstellung bezeichnet werden.

Gemäß einer weiteren Ausführungsform ist das elektronische Gerät dazu eingerichtet, in dem eingeschränkten Datenschutzmodus vordefinierte gespeicherte Daten nicht zu versenden.

Die gespeicherten Daten, die in dem eingeschränkten Datenschutzmodus nicht versendet werden sollen, können durch einen Benutzer vordefiniert werden. Der eingeschränkte Datenschutzmodus funktioniert daher als eine Art Filter. Beispielsweise kann definiert werden, über welchen Typ an Verbindung das Versenden von Daten erfolgen darf. Des Weiteren kann eingestellt werden, welche Art bzw. welcher Typ von Daten versendet werden darf. Beispielsweise kann definiert sein, dass orts- und zeitbezogene Daten versendet werden dürfen, wohingegen Sprach- und Bilddaten nicht versendet werden dürfen. Jegliche andere Art oder Kombination von Definition kann ebenfalls erfolgen.

Gemäß einer weiteren Ausführungsform ist der Schalter dazu eingerichtet, eine Steuereinrichtung des elektronischen Geräts zu aktivieren, um Einstellungen des Datenschutzmodus zu bearbeiten.

Beispielsweise kann die Steuereinrichtung ein Kontrollzentrum des elektronischen Geräts auf einem Display des elektronischen Geräts anzeigen, um dem Benutzer zu ermöglichen, Einstellungen vorzunehmen. Insbesondere können Einstellungen in Bezug auf den eingeschränkten Datenschutzmodus vorgenommen werden, um die vordefinierten gespeicherten Daten zu definieren. Durch die Steuereinrichtung wird die Position bzw. Stellung des Schalters intern in dem elektronischen Gerät an andere Softwarekomponenten weitergegeben. Diese Softwarekomponenten werden dann entsprechend eingestellt, um den Datenschutzmodus umzusetzen.

Beispielsweise kann eine erneute Betätigung des Schalters dazu dienen, die Steuereinrichtung zu aktivieren. Alternativ kann auch eine bestimmte Zeitdauer der Betätigung des Schalters dazu dienen, die Steuereinrichtung zu aktivieren.

Gemäß einer weiteren Ausführungsform beeinflusst der Datenschutzmodus eine Sichtbarkeit des elektronischen Geräts gegenüber anderen elektronischen Geräten.

Auf diese Weise kann durch den Datenschutzmodus eingestellt werden, dass das elektronische Gerät für Dritte nicht sichtbar ist, und somit nicht zum Empfangen von Daten eingerichtet ist. Eine normale Kommunikation, wie beispielsweise der Zugriff auf ein Netzwerk, soll nicht zwingend eingeschränkt werden, sondern lediglich die Sichtbarkeit gegenüber Dritten.

Gemäß einem weiteren Aspekt wird ein elektronisches Gerät mit einem Schalter, der die oben beschriebenen Merkmale aufweist, und einer Schnittstelle vorgeschlagen, die dazu eingerichtet ist, das elektronische Gerät mit dem Schalter zu koppeln.

Gemäß einer Ausführungsform ist der Schalter in dem elektronischen Gerät integriert.

Beispielsweise kann der Schalter als mechanischer Schalter aus dem elektronischen Gerät herausragen, um durch einen Benutzer betätigbar zu sein. In diesem Fall handelt es sich bei der Schnittstelle des Schalters und der Schnittstelle des elektronischen Geräts um interne Schnittstellen innerhalb des elektronischen Geräts.

Gemäß einer Ausführungsform weist das elektronische Gerät eine Speichereinrichtung zur Speicherung von persönlichen Daten auf.

Durch die Aktivierung des Datenschutzmodus kann das Weitergeben von Daten, die in der Speichereinrichtung gespeichert sind, eingeschränkt werden.

Gemäß einem weiteren Aspekt wird ein Verfahren zum Aktivieren eines Datenschutzmodus eines elektronischen Geräts, welches zum Versenden von auf dem elektronischen Gerät gespeicherten Daten eingerichtet ist, vorgeschlagen. Das Verfahren weist einen ersten Schritt des Koppelns des Schalters mit dem elektronischen Gerät über eine Schnittstelle auf. In einem zweiten Schritt erfolgt ein mechanisches Betätigen des Schalters durch einen Benutzer. In Antwort auf das mechanische Betätigen erfolgt in einem dritten Schritt das Senden eines Signals an das elektronische Gerät und als vierter Schritt das Aktivieren des Datenschutzmodus.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für den vorgeschlagenen Sensor und das elektronische Gerät beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht eines Ausführungsbeispiels eines Schalters mit einem elektronischen Gerät;
Fig. 2 zeigt eine schematische Ansicht eines Ausführungsbeispiels eines elektronischen Geräts;
Fig. 3 zeigt eine schematische Ansicht eines Ausführungsbeispiels eines Kontrollzentrums des elektronischen Geräts von Fig. 2;
Fig. 4 zeigt eine schematische Ansicht eines weiteren Ausführungsbeispiels eines elektronischen Geräts; und
Fig. 5 zeigt ein Ausführungsbeispiel eines Verfahrens zum Aktivieren eines Datenschutzmodus.

In den Figuren sind gleiche oder funktionsgleiche Elemente mit denselben Bezugszeichen versehen worden, sofern nichts anderes angegeben ist.

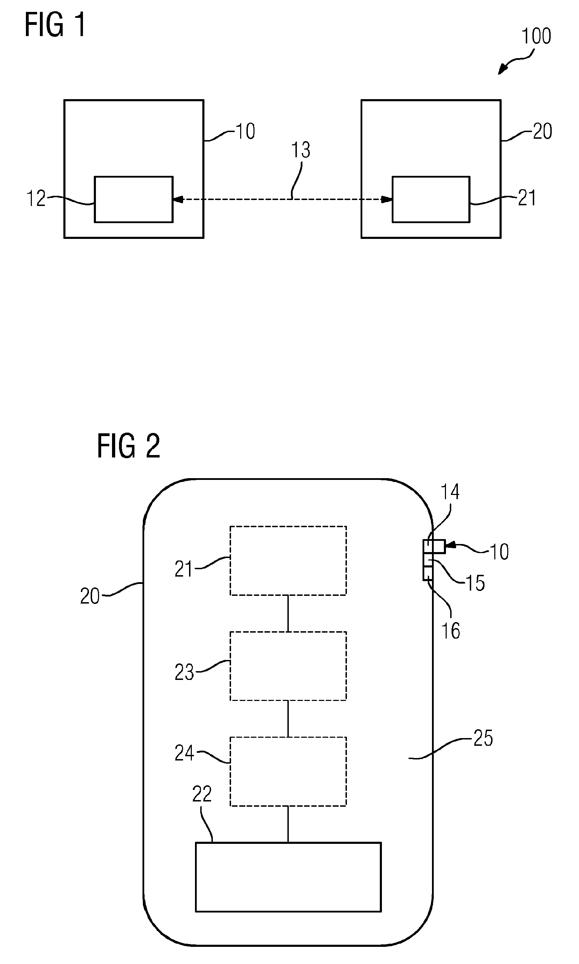

Fig. 1 zeigt ein System 100, in dem ein Schalter 10 Einstellungen in Bezug auf persönliche Daten an einem elektronischen Gerät 20 vornehmen kann. Der Schalter 10 weist eine Schnittstelle 12 auf, die mit einer entsprechenden Schnittstelle 21 des elektronischen Geräts 20 koppelbar ist. Der Schalter 10 kann über diese Schnittstelle 12 Signale 13 an die Schnittstelle 21 des elektronischen Geräts 20 senden. Diese Kommunikation kann sowohl kabelgebunden über eine physikalische Schnittstelle als auch kabellos über eine Funkschnittstelle realisiert sein.

Bei einer Betätigung des Schalters 10 durch einen Benutzer sendet der Schalter 10 ein Signal 13 an das elektronische Gerät 20. Das elektronische Gerät 20 empfängt das Signal 13 über die Schnittstelle 21. Basierend auf der mechanischen Betätigung des Schalters 10 bzw. in Antwort auf das Signal 13 aktiviert bzw. deaktiviert das elektronische Gerät 20 einen Datenschutzmodus. Bei einem aktivierten Datenschutzmodus werden auf dem elektronischen Gerät 20 gespeicherte Daten, die als persönliche Daten gekennzeichnet sind, nicht an Dritte versendet. Bei einem deaktivierten Datenschutzmodus werden die persönlichen Daten an Dritte versendet.

Fig. 2 zeigt ein Beispiel eines elektronischen Geräts 20 in Form eines Smartphones oder Tablet-PCs. Der Schalter 10 ist in dem Gerät 20 von Fig. 2 physikalisch integriert, und ist als Schalter 10 an einer Außenseite des elektronischen Geräts 20 realisiert.

Der Schalter 10 weist drei Stufen 14, 15, 16 auf. In einer eingeschalteten Stufe 14 ist die Versendung sämtlicher persönlicher Daten deaktiviert. In der ausgeschalteten Stufe 16 ist die Versendung sämtlicher persönlicher Daten aktiviert. In einer Zwischenstellung 15, auch als Intermediate-Stellung bezeichnet, ist die Versendung von persönlichen Daten eingeschränkt aktiviert bzw. deaktiviert.

Die Einstellung der Zwischenstellung 15 kann über ein Kontrollzentrum 22 erfolgen, das auf einem Bildschirm bzw. Display 25 des elektronischen Geräts 20 dargestellt wird. Das Kontrollzentrum 22 wird durch eine Steuereinrichtung 24 in Antwort auf eine Betätigung des Schalters 10 aufgerufen. Mittels des Kontrollzentrums 22 bzw. die Steuereinrichtung 24 kann der Benutzer einstellen, welche Daten als persönliche Daten anzusehen sind und/oder welche persönlichen Daten an Dritte in der Zwischenstellung 15 versendet werden dürfen. Die persönlichen Daten sind in einer Speichereinrichtung 23 des elektronischen Geräts 20 gespeichert.

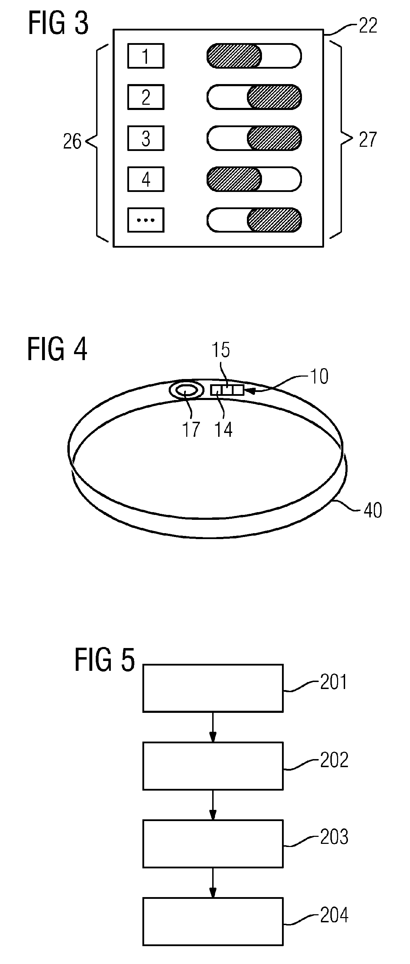

Fig. 3 zeigt ein beispielhaftes Kontrollzentrum 22. Sobald der Benutzer das Kontrollzentrum 22 öffnet, werden verschiedene Einstellmöglichkeiten 1, 2, 3, 4, ..., die als 24 gekennzeichnet sind, angeboten. Die Einstellmöglichkeiten 24 können verschiedene Arten von persönlichen Daten darstellen. Dazu zählen beispielsweise ortsabhängige Daten, zeitabhängige Daten, Beschleunigungsdaten, Mikrofon-/Kameradaten bzw. Sprach- und Bilddaten. Jede Art von Daten kann über einen Schiebeschalter 27 aktiviert bzw. deaktiviert werden.

Fig. 4 zeigt ein weiteres Beispiel eines Systems mit einem Schalter 10. In diesem Fall ist das System ein Sensorband 40, das einen Sensor 17 aufweist. Ein solches Sensorband 40 kann beispielsweise als Pulsmessgerät realisiert sein. In diesem Fall würde der Sensor 17 die Pulsdaten an ein entferntes Gerät (nicht gezeigt) übertragen. Durch den Schalter 10 kann die Weitergabe dieser Pulsdaten von dem Sensor 17 an ein entferntes elektronisches Gerät beschränkt werden.

Fig. 5 zeigt ein Ausführungsbeispiel eines entsprechenden Verfahrens. In dem Verfahren wird in einem ersten Schritt 201 der Schalter 10 mit dem elektronischen Gerät 20 über eine Schnittstelle 12, 21 gekoppelt. In einem zweiten Schritt 202 wird der Schalter 10 durch einen Benutzer mechanisch betätigt. Anschließend wird in Antwort auf die mechanische Betätigung ein Signal 13 an das elektronische Gerät 20 in einem dritten Schritt 203 gesendet. Durch das Senden des Signals 13 bzw. das Empfangen des Signals 13 in dem elektronischen Gerät 20 wird der Datenschutzmodus in einem vierten Schritt 204 aktiviert. Obwohl die vorliegende Erfindung anhand von Ausführungsbeispielen beschrieben wurde, ist sie vielfältig modifizierbar.

## Patentansprüche

1. Schalter (10) zum Aktivieren eines Datenschutzmodus eines elektronischen Geräts (20), welches zum Versenden von auf dem elektronischen Gerät (20) gespeicherten Daten eingerichtet ist, mit:
einer Schnittstelle (12) zum Koppeln des Schalters (10) mit dem elektronischen Gerät (20),
wobei der Schalter (12) dazu eingerichtet ist, bei einer mechanischen Betätigung durch einen Benutzer ein Signal (13) an das elektronische Gerät (20) zu senden, um den Datenschutzmodus zu aktivieren.

2. Schalter (10) nach Anspruch 1,
**dadurch gekennzeichnet,**
**dass** die Schnittstelle (12) eine Funkschnittstelle ist.

3. Schalter (10) nach Anspruch 1 oder 2,
**dadurch gekennzeichnet,**
**dass** die Schnittstelle (12) eine kabelgebundene Schnittstelle ist.

4. Schalter (10) nach einem der Ansprüche 1 - 3,
**dadurch gekennzeichnet,**
**dass** die gespeicherten Daten persönliche Daten des Benutzers aufweisen.

5. Schalter (10) nach einem der Ansprüche 1 - 4,
**dadurch gekennzeichnet,**
**dass** der Schalter (10) dazu eingerichtet ist, in Antwort auf eine erneute Betätigung des Benutzers den Datenschutzmodus zu deaktivieren.

6. Schalter (10) nach einem der Ansprüche 1 - 5,
**dadurch gekennzeichnet,**
**dass** das elektronische Gerät (20) dazu eingerichtet ist, in dem aktivierten Datenschutzmodus keine gespeicherten Daten zu versenden.

7. Schalter (10) nach einem der Ansprüche 1 - 6, **gekennzeichnet durch**
eine erste Schalterstellung (14) und eine zweite Schalterstellung (16), wobei die erste Schalterstellung (14) einem deaktivierten Datenschutzmodus entspricht und die zweite Schalterstellung (16) einem aktivierten Datenschutzmodus entspricht.

8. Schalter (10) nach Anspruch 7,
**gekennzeichnet durch**
eine dritte Schalterstellung (15), die einem eingeschränkten Datenschutzmodus entspricht.

9. Schalter (10) nach Anspruch 8,
**dadurch gekennzeichnet,**
**dass** das elektronische Gerät (20) dazu eingerichtet ist, in dem eingeschränkten Datenschutzmodus vordefinierte gespeicherte Daten nicht zu versenden.

10. Schalter (10) nach einem der Ansprüche 1 - 9,
**dadurch gekennzeichnet,**
**dass** der Schalter (10) dazu eingerichtet ist, eine Steuereinrichtung (24) des elektronischen Geräts (20) zu aktivieren, um Einstellungen des Datenschutzmodus zu bearbeiten.

11. Schalter (10) nach einem der Ansprüche 1 - 10,
**dadurch gekennzeichnet,**
**dass** der Datenschutzmodus eine Sichtbarkeit des elektronischen Geräts (20) gegenüber anderen elektronischen Geräten beeinflusst.

12. Elektronisches Gerät (20) mit:
einem Schalter (10) nach einem der Ansprüche 1 - 11 und
einer Schnittstelle (21), die dazu eingerichtet ist, das elektronische Gerät (20) mit dem Schalter (10) zu koppeln.

13. Elektronisches Gerät (20) nach Anspruch 12,
**dadurch gekennzeichnet,**
**dass** der Schalter (10) in dem elektronischen Gerät (20) integriert ist.

14. Elektronisches Gerät (20) nach Anspruch 12 oder 13, **gekennzeichnet durch**
eine Speichereinrichtung (23) zur Speicherung von persönlichen Daten.

15. Verfahren zum Aktivieren eines Datenschutzmodus eines elektronischen Geräts (20), welches zum Versenden von auf dem elektronischen Gerät (20) gespeicherten Daten eingerichtet ist, mit:
Koppeln (201) des Schalters (10) mit dem elektronischen Gerät (20) über eine Schnittstelle (12),
mechanisches Betätigen (202) des Schalters (10) durch einen Benutzer,
Senden (203) eines Signals (13) an das elektronische Gerät (20) in Antwort auf das mechanische Betätigen, und
Aktivieren (204) des Datenschutzmodus.
